# EUROPEAN PATENT SPECIFICATION

(11) **EP 3 495 029 B1**
(45) Date of publication and mention of the grant of the patent: **03.07.2024**
(21) Application number: 16911721.5
(22) Date of filing: 11.11.2016
(51) Int. Cl.: B01D 11/04

(54) **MODULAR EXTRACTION TOWER**
MODULARER EXTRAKTIONSTURM
TOUR D'EXTRACTION MODULAIRE

(30) Priority: 05.08.2016 KR 20160099947
(43) Date of publication of application: 12.06.2019
(73) Proprietor: Kepco Nuclear Fuel Co., Ltd, Daejeon 34057 (KR)
(72) Inventor: BAE, Youngmoon, Daejeon 34034 (KR); YANG, Seungchul, Daejeon 34112 (KR); LEE, Byungkuk, Sejong 30098 (KR); KWAK, Dongyong, Daejeon 34130 (KR); MIN, Junsang, Seoul 01235 (KR)
(74) Representative: De Vries & Metman
(86) International application number: PCT/KR2016/013022
(87) International publication number: WO 2018/026060

(56) References cited:
- EP-A1- 2 796 190
- CN-U- 201 643 778
- CN-U- 202 724 746
- DE-A1- 3 727 481
- KR-A- 20130 083 850
- KR-A- 20140 044 847
- US-A- 1 749 266
- US-A- 2 850 362
- US-B1- 6 569 390
- US-B1- 6 875 406

## Description

### Technical Field

The present invention relates to a modular extraction column.

### Background Art

An extraction column is used in a variety of chemical plants, as major equipment in an extraction process. The extraction column performs extraction by allowing a heavy phase of higher density to be input into a top head thereof to flow downwards while allowing a light phase of lower density to be input into a bottom head thereof, such that the two phases continuously come into countercurrent contact. Such extraction columns are fabricated in a variety of diameters and heights according to the properties of fluid in processes. Inner structures having a variety of shapes may be added to increase the contact area between fluids as required.

As a prior-art document related to extraction column, Korean Patent No. 10-1522771 (patented on May 26, 2015) disclosed a vertical liquid-liquid separation apparatus based on the principle of a mixer-settler apparatus. The disclosed apparatus has superior acid/base resistance, with parts thereof being able to be easily operated.

A typical extraction column as disclosed in the prior-art document has an integrated structure, in which the height of the column is determined using a specific standard, such as height of transfer unit (HTU) and number of transfer unit (NTU). Once the extraction column is constructed, it is difficult to disassemble the extraction column into pieces. It is therefore difficult to change the inner structure of the extraction column, replace a damaged structural part of the extraction column, or remove internal contaminants when considering process operations of the extraction column.

### [Related Art Documents]

Korean Patent No. 10-1522771 (May 26, 2015). See also: US 6 875 406 B1 (April 5, 2005); US 1 749 266 A (March 4, 1930); CN 201 643 778 U (November 24, 2010); DE 37 27 481 A1 (March 2, 1989); EP 2 796 190 A1 (October 29, 2014) .

### Disclosure

### Technical Problem

Accordingly, the present invention has been made keeping in mind the above problems occurring in the related art, and the present invention is intended to propose a modular extraction column that can be easily fabricated and constructed, and after construction, allows for easy maintenance, such as replacement of a damaged structural part and removal of contaminants.

### Technical Solution

In order to achieve the above object, according to one aspect of the present invention, a modular extraction column includes the features of independent claim 1.

### Advantageous Effects

According to the present invention, the modular extraction column facilitates the assembly and construction thereof, since the modular extraction column includes the end blocks and the body block consisting of the column modules.

In addition, according to the present invention, after the construction of the modular extraction column, it is possible to easily change the inner structure or the volume of the extraction column by changing the number of the column modules of the body block, which is advantageous.

Furthermore, according to the present invention, the inner structure is provided the shape of a cartridge for each column module and the cover is provided in the open area of the column module. It is therefore easy attach or detach the inner structure to or from the column module, thereby advantageously facilitating maintenance, such as replacement of a damaged portion of the inner structure or removal of contaminants.

In addition, according to the present invention, the cross-section of the modular extraction column in the direction perpendicular to the longitudinal direction is quadrangular (more particularly, rectangular) instead of being curved, thereby advantageously facilitating fabrication.

The effects of the present invention are not limited to the above-described effects but the other effects will be apparent to those skilled in the art to which the present invention belongs from the specification and the accompanying drawings.

### Description of Drawings

FIG. 1 is an assembly view schematically illustrating a modular extraction column according to an exemplary embodiment of the present invention;
FIG. 2 is a perspective view illustrating a column module according to the exemplary embodiment of the present invention;
FIG. 3A is a front elevation view illustrating the column module shown in FIG. 2;
FIGS. 3B and 3C are cross-sectional views taken along lines A-A' and B-B' in FIG. 3A;
FIGS. 4A and 4B are front elevation views illustrating the column module and the cover according to the exemplary embodiment of the present invention; and
FIGS. 5A to 5E are perspective assembled views schematically illustrating examples of the inner structure according to the exemplary embodiment of the present invention.

### Best Mode

Descriptions of specific structures and functions disclosed in the following embodiments of the present invention are only provided to render exemplary embodiments according to the concept of the present invention. The embodiments according to the concept of the present invention may be implemented in a variety of forms. In addition, it is to be understood that the present description is not intended to limit the present invention to those exemplary embodiments. On the contrary, the present invention is intended to cover not only the exemplary embodiments, but also various alternatives, modifications, equivalents, and substitution, that may be included within scope of the present invention, as defined by the appended claims.

Hereinafter, the present invention will be described in detail with reference to the drawings. Herein, the same reference numerals will be used throughout the drawings to refer to the components having substantially the same functions.

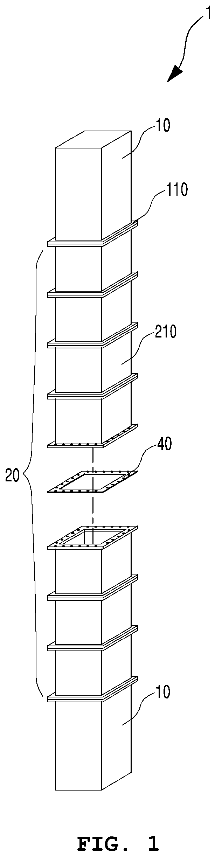

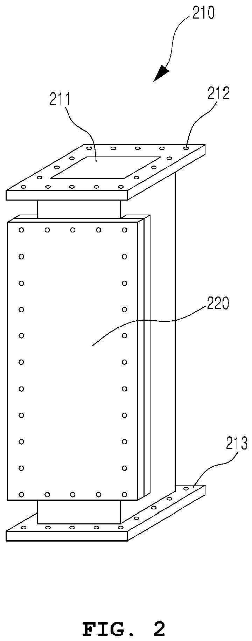

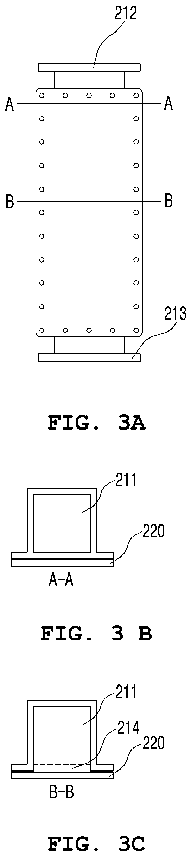

FIG. 1 is an assembly view schematically illustrating a modular extraction column according to an exemplary embodiment of the present invention, FIG. 2 is a perspective view illustrating a column module according to the exemplary embodiment of the present invention, FIG. 3A is a front elevation view illustrating the column module shown in FIG. 2, and FIGS. 3B and 3C are cross-sectional views taken along lines A-A' and B-B' in FIG. 3A. As illustrated in FIGS. 1 to 3C, the modular extraction column 1 includes end blocks 10, a body block 20, and inner structures.

The end blocks 10 are disposed on both ends of the modular extraction column 1. Each of the end blocks 10 has a flange on one side, and is coupled to the body block 20.

The body block 20 is a multi-stage structure, with both ends thereof being coupled to the flanges 110 of the end blocks 10 in a surface contact manner. The body block 20 includes column modules 210 and covers 220. The body block 20 is formed by stacking the column modules 210 having a predetermined length on one another, instead of having an integrated structure.

As illustrated in FIGS. 2, 3A to 3C, each column module 210 includes a first module flange 212 and a second module flange 213. An accommodating portion 211 having a predetermined area is formed within the column module 210. In addition, the column module 210 has an open area 214 in one side. The open area 214 is able to communicate with the accommodating portion 211 within the column module 210.

The length of the column module 210 may be adjusted considering the ease of manufacturing, fabrication, and maintenance according to the space of construction.

The modular extraction column 1 according to the present embodiment as described above advantageously facilitates the assembly and construction thereof, since the modular extraction column 1 includes the end blocks 10 and the body block 20 consisting of the column modules 210.

In addition, after the construction of the modular extraction column, it is possible to easily change the inner structure or the volume of the extraction column by changing the number of the column modules 210 of the body block 20, which is advantageous.

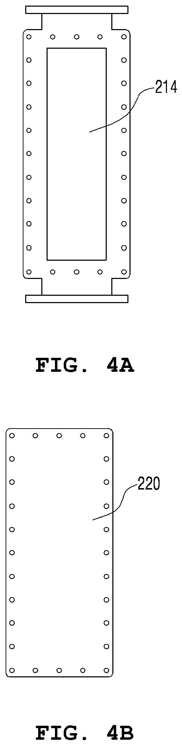

FIGS. 4A and 4B are front elevation views illustrating the column module 210 and the cover 220 according to the exemplary embodiment of the present invention. As illustrated in FIGS. 4A and 4B, the column module 210 further includes the cover 220. The cover 220 has a shape and size covering the open area 214 formed in one side of the column module 210, and can be detachably coupled to the side of the column module 210 to open and close the open area 214.

The cover 220 is detachably coupled to one side of the column module 210, such that a coupling portion thereof forms a flange. The cover 220 is coupled to the column module 210 using bolts. The cover 220 may further include a gasket 40 to prevent leakage in the connecting portion between the column module 210 and the cover 220.

Since the column module 210 according to the present invention has the cover 220, it is possible to easily attach or detach an inner structure 310 to or from each column module 210 through the open area 214. This advantageously facilitates maintenance, such as replacement of a damaged portion of the inner structure 310 or removal of contaminants.

The first module flange 212 and the second module flange 213 are provided coaxially on the opposite ends of the column module 210 to face away from each other. The first module flange 212 and the second module flange 213 may be arranged to abut against one or both of the flanges 110 of the end blocks 10 or the second module flange 213 and the first module flange 212 of the adjacent other column modules 210 to be coupled thereto in extended areas. In this case, the dimensions, shape, and size of the first module flange 212 are the same as those of the second module flange 213 and, furthermore, the flange 110, such that the column module 210 can be disposed without being restricted in the orientation thereof. Shortly, the end blocks 10 and the body block 20 can be coupled to each other using the flanges.

The end blocks 10 and the body block 20 may communicate with each other in the longitudinal direction while having quadrangular (more particularly, rectangular) cross-sections in the direction perpendicular to the longitudinal direction. In addition, the accommodating portion 211 of the body block 20 has a quadrangular (more particularly, rectangular) cross-section in the direction perpendicular to the longitudinal direction.

The end blocks 10 and the body block 20 according to the embodiment of the present invention as described above have quadrangular (more particularly, rectangular) cross-sections in the direction perpendicular to the longitudinal direction. Since the quadrangular cross-section does not provide a curved surface, fabrication-involved operations, such as cutting or welding, are facilitated.

The end blocks 10 and the body block 20 may be stacked on and coupled to each other via gaskets 40. The gaskets 40 are provided in connecting portions between the flanges 110 of the end block 10 and the first module flange(s) 212 and the second module flange(s) 213 of the body block 20, thereby preventing leakage in the connecting portions.

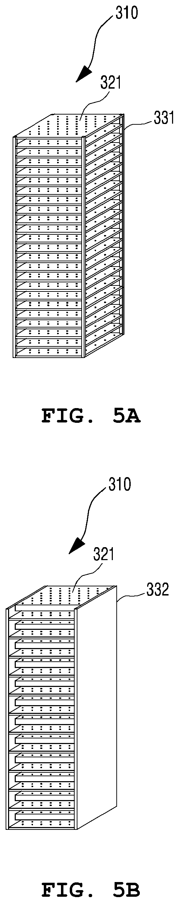

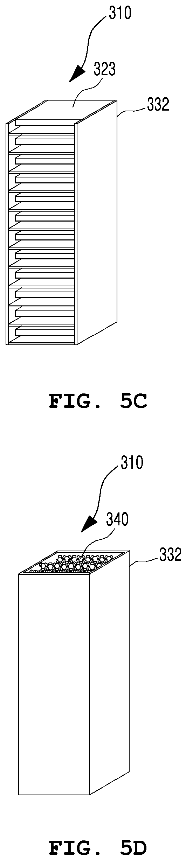

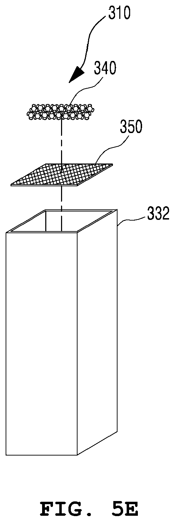

FIGS. 5A to 5E are perspective assembled views schematically illustrating examples of the inner structure 310 according to the exemplary embodiment of the present invention. As illustrated in FIGS. 5A to 5E, the internal structure 310 has the shape of a cartridge that is introduced through the open area 214 and is seated in the accommodating portion 211 adjacent to the open area 214. The internal structure 310 is accommodated in the accommodating portion(s) 211 of the body block(s) 20 and functions to distribute fluid, thereby increasing the contact area between fluids.

A first embodiment of the inner structure 310 includes a structural body 320 and a support 330. The inner structure 310 is provided in each column module 210 of the modular extraction column 1. The inner structure 310 may be fabricated separately from the column module 210 to be coupled to the latter in order to increase the contact area between fluids.

In addition, the inner structure 310 may be fabricated with an outer size that does not form a gap between the inner structure 310 and the inner surface of the column module 210. Due to the quadrangular cross-sections, the modular extraction column according to the embodiment of the present invention can be easily fabricated, constructed, and assembled without leaving a gap between the inner structure 310 and the column module 210, differently from common extraction column having circular cross-sections. Consequently, the modular extraction column according to the embodiment of the present invention is able to have higher efficiency.

The structural body 320 may be formed by stacking a plurality of structural sections having the same shape on one another in the top-bottom direction to distribute a fluid in order to increase the contact area between fluids. The structural body 320 may be fabricated as one of a structure including perforated plates 321, a structure including sieve trays 322, or a structure including baffle trays 323.

The support 330 serves to support the structural body 320. When the structural body 320 is assembled by stacking the plurality of pieces on one another, the support 330 may be implemented as support legs 331 or support plates 332. The support legs 331 are coupled to the corners of the structural body 320 to support and fix the structural body 320. The support plates 332 may be provided as two or more support plates 332 to hold and fix the structural body 320. More specifically, the support plates 332 may be provided as a plurality of plates such that the edges of the plates are abutted against each other to form a rectangular horizontal cross-section. Alternatively, the support plates 332 may be implemented as a pair of right and left plates forming partitions, by which the structural body 320 is held and fixed.

The structural body 320 and the support 330 may be fabricated in a size that allows the structural body 320 and the support 330 to be disposed within the accommodating portion 211 of the column module 210. The structural body 320 and the support 330 may be coupled to each other using one, selected from among welding, rivets, bolts, and spline fitting, according to different process characteristics and fabrication convenience.

A second embodiment of the inner structure 310 may include the support 330 and packing 340. In addition, the second embodiment of the inner structure 310 may further include a packing holding film 350. The support 330 may include a plurality of support plates 332, the edges of which are coupled to each other to form a rectangular horizontal cross-section, such that a hollow inner area is defined within the support plates 332. The packing 340 may be accommodated in the hollow inner area and may be coupled to the support 330.

The packing holding film 350 may be a structure disposed on one or both sides of the support 330. The packing holding film 350 may allow fluids to pass therethrough while supporting packing 340 such that the packing 340 such is not drained by flows of fluid. Although the packing holding film 350 may a mesh structure having a predetermined size, this is not intended to be limiting.

The first embodiment and the second embodiment of the inner structure 310 may be determined suitably according to process characteristics.

The modular extraction column 1 disclosed with reference to FIGS. 1 to 5E is not limited to the specific length or shape but is only provided for a better understanding of the present invention to those skilled in the art to which the present invention belongs.

Although the exemplary embodiments of the present invention have been described for illustrative purposes, those skilled in the art will appreciate that various modifications, additions and substitutions are possible, without departing from the scope of the present invention as disclosed in the accompanying claims.

### [Description of Reference Numerals]

| | | | |
|---|---|---|---|
| 1: | modular extraction column | | |
| 10: | end block | 110: | flange |
| 20: | body block | 210: | module |
| 211: | accommodating portion | | |
| 212: | first module flange | | |
| 213: | second module flange | 214: | open area |
| 220: | cover | | |
| 310: | cartridge | 321: | perforated plate |
| 322: | sieve tray | 323: | baffle tray |
| 331: | support leg | 332: | support plate |
| 340: | packing | 350: | packing holding film |
| 40: | gasket | | |

## Claims

1. A modular extraction column (1) comprising:
end blocks (10) respectively having a flange (110) on one side;
a body block (20) comprising a plurality of column modules (210) stacked on each other, the plurality of column modules (210) being coupled to the flanges (110) of the end blocks (10) in a surface contact manner, each of the plurality of column modules (210) comprising a first module flange (212) and a second module flange (213) provided on opposite ends and an accommodating portion (211) provided in an inner portion to have a predetermined area, wherein the plurality of column modules (210) are coupled to each other such that the first module flange (212) of one column module (210) among the plurality of column modules faces the second module flange (213) of an adjacent column module (210) among the plurality of column modules; and
an inner structure (310) received in the accommodating portions (211) of the plurality of column modules (210) to distribute a fluid,
**characterized in that** each of the plurality of column modules (210) have a quadrangular cross-section in a direction perpendicular to a longitudinal direction thereof and the end blocks (10) and the body block (20) communicate with each other, the accommodating portion (211) of each of the plurality of column modules (210) having a quadrangular cross-section in a direction perpendicular to a longitudinal direction thereof,
wherein each of the plurality of column modules (2100 further comprises a cover (220) disposed adjacent to an open area (214) formed in one side of the each column module (210), the cover (220) being detachably coupled to a predetermined portion of the each column module (210) to open and close the open area (214),
wherein the inner structure (310) comprises a cartridge (310) introduced through the open area (214) and seated in the accommodating portion (211) communicating with the open area (214).

2. The modular extraction column (1) according to claim 1, wherein the end blocks (10) and the body block (20) are coupled to and stacked on each other such that the flanges (110) of the end blocks (10) are coupled to the first module flange (212) of a predetermined column module (210) among the plurality of column modules and the second module flange (213) of the opposite column module (210) among the plurality of column modules.

3. The modular extraction column (10) according to claim 1, wherein the inner structure (310)comprises:
a structural body formed of a plurality of structural sections having a predetermined shape and stacked in a top-bottom direction; and
a support fixedly supporting the structural body.

4. The modular extraction column (1) according to claim 3, wherein the structural body comprises one selected from the group consisting of perforated plates (321), sieve trays (322), and baffle trays (323).

5. The modular extraction column according to claim 3, wherein the support comprises:
support legs (331) coupled to corners of the structural body to support and fix the structural body; or
two or more support plates (332) holding and fixing the structural body,
wherein the structural body and the support are coupled to each other using one selected from the group consisting of welding, rivets, bolts, and spline fitting.

6. The modular extraction column (1) according to claim 1, wherein the inner structure (310) comprises:
a support having a quadrangular horizontal cross-section and a hollow inner area; and
packing accommodated in the hollow inner area.

7. The modular extraction column (1) according to claim 6, wherein the inner structure (310) further comprises one or two packing holding films disposed on one or both sides of the support, the packing holding films allowing fluids to pass therethrough.

## Patentansprüche

1. Modulare Extraktionskolonne (1), aufweisend:
Endblöcke (10), die jeweils einen Flansch (110) an einer Seite haben,
einen Körperblock (20), der eine Mehrzahl von
aufeinandergestapelten Kolonnenmodulen (210) aufweist, wobei die Mehrzahl von Kolonnenmodulen (210) mit den Flanschen (110) der Endblöcke (10) in einer Flächenkontaktweise gekuppelt sind, wobei jedes von der Mehrzahl von Kolonnenmodulen (210) aufweist einen ersten Modulflansch (212) und einen zweiten Modulflansch (213), die an entgegengesetzten Enden bereitgestellt sind, und einen Aufnahmeabschnitt (211), der in einem inneren Abschnitt bereitgestellt ist, um einen vorbestimmten Bereich zu haben, wobei die Mehrzahl von Kolonnenmodulen (210) miteinander derart gekuppelt sind, dass der erste Modulflansch (212) von einem Kolonnenmodul (210) unter der Mehrzahl von Kolonnenmodulen dem zweiten Modulflansch (213) eines benachbarten Kolonnenmoduls (210) unter der Mehrzahl von Kolonnenmodulen zugewandt ist, und
eine innere Struktur (310), die in den Aufnahmeabschnitten (211) der Mehrzahl von Säulenmodulen (210) aufgenommen ist, um ein Fluid zu verteilen,
**dadurch gekennzeichnet, dass** jedes von der Mehrzahl von Säulenmodulen (210) einen viereckigen Querschnitt in einer Richtung senkrecht zu einer Längsrichtung davon hat und die Endblöcke (10) und der Körperblock (20) miteinander kommunizieren, wobei der Aufnahmeabschnitt (211) von jedem von der Mehrzahl von Kolonnenmodulen (210) einen viereckigen Querschnitt in einer Richtung senkrecht zu einer Längsrichtung davon hat,
wobei jedes von der Mehrzahl von Kolonnenmodulen (2100 ferner eine Abdeckung (220) aufweist, die benachbart zu einem offenen Bereich (214) angeordnet ist, der in einer Seite von jedem Kolonnenmodul (210) ausgebildet ist, wobei die Abdeckung (220) mit einem vorbestimmen Abschnitt von jedem Kolonnenmodul (210) lösbar gekuppelt ist, um den offenen Bereich (214) zu öffnen und zu schließen,
wobei die innere Struktur (310) eine Kassette (310) aufweist, die durch den offenen Bereich (214) hindurch eingebracht ist und in dem Aufnahmeabschnitt (211) sitzt, der mit dem offenen Bereich (214) kommuniziert.

2. Modulare Extraktionskolonne (1) gemäß Anspruch 1, wobei die Endblöcke (10) und der Körperblock (20) derart miteinander gekuppelt und aufeinandergestapelt sind, dass die Flansche (110) der Endblöcke (10) mit dem ersten Modulflansch (212) eines vorbestimmten Kolonnenmoduls (210) unter der Mehrzahl von Kolonnenmodulen und dem zweiten Modulflansch (213) des entgegengesetzten Kolonnenmoduls (210) unter der Mehrzahl von Kolonnenmodulen gekuppelt sind.

3. Modulare Extraktionskolonne (10) gemäß Anspruch 1, wobei die innere Struktur (310) aufweist:
einen Strukturkörper, der aus einer Mehrzahl von Strukturabschnitten gebildet ist, die eine vorbestimmte Gestalt haben und einer oben-unten-Richtung gestapelt sind, und
einen Halter, der den Strukturkörper fixiert hält.

4. Modulare Extraktionskolonne (1) gemäß Anspruch 3, wobei der Strukturkörper eines, ausgewählt aus der Gruppe, aufweist, die besteht aus perforierten Platen (321), Siebböden (322) und Trennböden (323).

5. Modulare Extraktionskolonne gemäß Anspruch 3, wobei der Halter aufweist:
Haltebeine (331), die mit Ecken des Strukturkörpers gekuppelt sind, um den Strukturkörper zu halten und zu fixieren, oder zwei oder mehr Halteplatten (332), die den Strukturkörper halten und fixieren,
wobei der Strukturkörper und der Halter miteinander gekuppelt sind unter Verwendung von einem, ausgewählt aus der Gruppe,
die besteht aus Schweißen, Nieten, Schrauben und Profilkeilverbinden.

6. Modulare Extraktionskolonne (1) gemäß Anspruch 1, wobei die innere Struktur (310) aufweist:
einen Halter, der einen viereckigen horizontalen Querschnitt und einen hohlen Innenbereich hat, und
Packwerk, das in dem hohlen Innenbereich aufgenommen ist.

7. Modulare Extraktionskolonne (1) gemäß Anspruch 6, wobei die innere Struktur (310) ferner aufweist einen oder zwei Packwerkhaltefilme, die an einer oder beiden Seiten des Halters angeordnet sind, wobei die Packwerkhaltefilme Fluiden erlauben, durch sie hindurch zu passieren.

## Revendications

1. Colonne d'extraction modulaire (1) comprenant :
des blocs d'extrémité (10) présentant respectivement un rebord (110) sur un côté ;
un bloc de corps (20) comprenant une pluralité de modules de colonne (210) empilés les uns sur les autres, la pluralité de modules de colonne (210) étant accouplés aux rebords (110) des blocs d'extrémité (10) à la manière d'un contact superficiel, chacun de la pluralité de modules de colonne (210) comprenant un premier rebord de module (212) et un deuxième rebord de module (213) prévus sur les extrémités opposées et une partie de réception (211) prévue dans une partie intérieure pour présenter une zone prédéterminée, dans laquelle la pluralité de modules de colonne (210) sont accouplés les uns aux autres de telle sorte que le premier rebord de module (212) d'un module de colonne (210) parmi la pluralité de modules de colonne est tourné vers le deuxième rebord de module (213) d'un module de colonne (210) adjacent parmi la pluralité de modules de colonne ; et
une structure intérieure (310) reçue dans les parties de réception (211) de la pluralité de modules de colonne (210) pour distribuer un fluide,
**caractérisée en ce que** chacun de la pluralité de modules de colonne (210) présentent une section transversale quadrangulaire dans une direction perpendiculaire à une direction longitudinale de ceux-ci et les blocs d'extrémité (10) et le bloc de corps (20) communiquent les uns avec les autres, la partie de réception (211) de chacun de la pluralité de modules de colonne (210) présentant une section transversale quadrangulaire dans une direction perpendiculaire à une direction longitudinale de ceux-ci, dans laquelle chacun de la pluralité de modules de colonne (2100) comprend en outre un couvercle (220) disposé de manière adjacente à une zone ouverte (214) formée dans un côté du chaque module de colonne (210), le couvercle (220) étant accouplé de manière détachable à une partie prédéterminée du chaque module de colonne (210) pour ouvrir et fermer la zone ouverte (214),
dans laquelle la structure intérieure (310) comprend une cartouche (310) introduite à travers la zone ouverte (214) et placée dans la partie de réception (211) communiquant avec la zone ouverte (214).

2. Colonne d'extraction modulaire (1) selon la revendication 1, dans laquelle les blocs d'extrémité (10) et le bloc de corps (20) sont accouplés les uns aux autres et empilés les uns sur les autres de telle sorte que les rebords (110) des blocs d'extrémité (10) sont accouplés au premier rebord de module (212) d'un module de colonne (210) prédéterminé parmi la pluralité de modules de colonne et au deuxième rebord de module (213) du module de colonne (210) opposé parmi la pluralité de modules de colonne.

3. Colonne d'extraction modulaire (10) selon la revendication 1, dans laquelle la structure intérieure (310) comprend :
un corps structural formé d'une pluralité de sections structurales présentant une forme prédéterminée et empilées dans une direction haut-bas ; et
un support supportant de manière fixe le corps structural.

4. Colonne d'extraction modulaire (1) selon la revendication 3, dans laquelle le corps structural comprend un sélectionné dans le groupe constitué de plaques perforées (321), plateaux-tamis (322) et plateaux déflecteurs (323).

5. Colonne d'extraction modulaire selon la revendication 3, dans laquelle le support comprend :
des jambes de support (331) accouplées aux coins du corps structural pour supporter et fixer le corps structural ; ou
deux plaques de support (332) ou plus retenant et fixant le corps structural,
dans laquelle le corps structural et le support sont accouplés l'uns à l'autre au moyen d'un sélectionné dans le groupe constitué par un soudage, des rivets, des boulons, et un moyeu à nervures.

6. Colonne d'extraction modulaire (1) selon la revendication 1, dans laquelle la structure intérieure (310) comprend :
un support présentant une section transversale quadrangulaire horizontale et une zone intérieure creuse ; et
un presse-étoupe reçu dans la zone intérieure creuse.

7. Colonne d'extraction modulaire (1) selon la revendication 6, dans laquelle la structure intérieure (310) comprend en outre un ou deux films de retenue de presse-étoupe disposés sur un ou les deux côtés du support, les films de retenue de presse-étoupe permettant aux fluides de passer à travers ceux-ci.
